# EUROPÄISCHE PATENTSCHRIFT

(11) **EP 2 158 449 B1**
(45) Veröffentlichungstag und Bekanntmachung des Hinweises auf die Patenterteilung: **28.03.2012**
(21) Anmeldenummer: 08801522.7
(22) Anmeldetag: 06.08.2008
(51) Int. Cl.: G01C 9/20, G01C 9/06

(54) **SENSORELEMENT UND EIN VERFAHREN ZUR HERSTELLUNG EINES KAPAZITIVEN SENSORS**
SENSOR ELEMENT AND A METHOD FOR THE PRODUCTION OF A CAPACITIVE SENSOR
ÉLÉMENT DE CAPTEUR ET PROCÉDÉ DE FABRICATION D'UN CAPTEUR CAPACITIF

(30) Priorität: 08.08.2007 DE 102007037519; 16.11.2007 DE 102007054828
(43) Veröffentlichungstag der Anmeldung: 03.03.2010
(73) Patentinhaber: 2E mechatronic GmbH & Co. KG, 73230 Kirchheim unter Teck (DE)
(72) Erfinder: KÜCK, Heinz, 70437 Stuttgart (DE); SCHWENK, Adrian, 71272 Renningen (DE); MAYER, Volker, 73098 Rechberghausen (DE); BENZ, Daniel, 71364 Winnenden (DE); FRITZ, Karl-Peter, 71034 Böblingen (DE)
(74) Vertreter: Zinkler, Franz
(86) Internationale Anmeldenummer: PCT/EP2008/006463
(87) Internationale Veröffentlichungsnummer: WO 2009/019004

(56) Entgegenhaltungen:
- EP-A- 0 492 330
- EP-A- 0 546 822
- DE-A1- 10 007 246
- GB-A- 2 304 418

## Beschreibung

Die vorliegende Erfindung bezieht sich auf ein Sensorelement und auf ein Verfahren zur Herstellung eines kapazitiven Sensors und insbesondere auf einen kapazitiven Sensor zum Messen einer Messgröße.

Kapazitive Sensoren können für eine Vielzahl von Anwendungen aus den Bereichen Haushalt, Industrie und Forschung eingesetzt werden. Beispiele dafür sind Neigungssensoren, welche als Überschlagsensoren in Kraftfahrzeugen, als Überwachungssensoren von Alarmanlagen in Fahrzeugen und Gebäuden und als Positionssensoren für automatisierte Maschinen, Bügeleisen, Waschmaschinen etc. eingesetzt werden können. Ein konkretes Beispiel ist das Feststellen einer Neigung eines geparkten Fahrzeuges, um den Fahrzeugführer auf die Gefahr des Wegrollens des Fahrzeuges hinweisen zu können.

Eine Reihe von herkömmlichen Sensoren wird eingesetzt, um durch die Messung einer messgrößenabhängigen Kapazitätsdifferenz einer Kondensatoranordnung eine Messgröße, wie beispielsweise die Neigung bezüglich der horizontalen Fläche bzw. der Horizontalen, zu ermitteln.

Hierfür werden beispielsweise Neigungssensoren eingesetzt, die über eine Messung einer Differenzkapazität bei neigungsbedingten Änderungen der überdeckten Fläche einer mit einem elektrisch leitfähigen Pendel gebildeten Differenzial-Kondensator-Anordnung die Neigung bestimmen. Weitere konventionelle kapazitive Sensoren führen eine Differenzkapazitätsmessung durch, wobei eine neigungsbedingte Änderung einer Anordnung einer elektrisch leitfähigen Flüssigkeit gegenüber den von ihr zum Teil überdeckten Kondensatorelektroden ermittelt wird.

Darüber hinaus können herkömmliche Kapazitätssensoren eingesetzt werden, um den Drehwinkel einer Welle mittels einer Messung einer winkelabhängigen Differenzkapazität einer Differenzial-Kondensator-Anordnung zu detektieren. Dabei lässt sich die Differenzial-Kondensator-Anordnung über eine mit der Welle verbundene elektrisch leitfähige Scheibe realisieren.

In DE 10 2005 025 908 ist ein kapazitiver Neigungssensor beschrieben, der über zwei Elektrodenpaare verfügt, die abwechselnd miteinander elektrisch verbunden werden können. Insbesondere ist die Anordnung der Elektrodenpaare derart gewählt, dass durch die abwechselnde Kapazitätsmessung (durch das abwechselnde Verbinden der Elektrodenpaare) eine Neigungsfeststellung in einem Winkelbereich zwischen 0° und 360° ermöglicht wird.

Die GB 2 304 418 A offenbart eine Füllstandsanzeige und einen Winkeldetektor, der einen Hohlraum aufweist, in welchem zwei Elektrodenflächen angeordnet sind, so dass zwischen den Elektroden entweder eine Kapazitätsmessung oder eine Widerstandsmessung vorgenommen werden kann. Aufgrund der Form der Elektroden kann entweder der Füllstand oder die Neigung erfasst werden. Als Materialien werden dabei Leiterplatten für die Elektrodenflächen bzw. PVC für das Abstandselement offenbart, die bevorzugt mittels Epoxid versiegelt werden.

Die DE 100 07 246 A2 offenbart einen elektrostatischen kapazitiven Neigungssensor, bei dem wiederum zwei Elektrodenflächen in einem Hohlraum ausgebildet sind, um eine Differenzkapazitätsmessung durchzuführen.

Die EP 0 492 330 A offenbart einen kapazitiven Neigungssensor, bei dem eine dielektrische Flüssigkeit in einem zylinderförmigen Behälter angeordnet wird, um über eine Differenzkapazitätsmessung eine Neigung des Sensors zu detektieren.

Die EP 0 546 822 A offenbart einen Neigungssensor unter Verwendung einer dielektrischen Flüssigkeit, wobei als Material Keramik genutzt wird und die leitfähigen Schichten auf die Keramik aufgedampft werden. Die Keramik weist eine Vertiefung auf, die durch einen Deckel verschlossen wird. Eine Justierung des Deckels erfolgt mittels Justierelemente, die auf dem Keramik-Boden ausgebildet sind.

Ein Nachteil der konventionellen Kapazitätssensoren besteht beispielsweise in der komplexen Bauweise und der damit verbundenen aufwändigen Herstellung. Außerdem können Konstruktionen, wie beispielsweise die Verwendung von Pendel, dazu führen, dass die Robustheit gegenüber äußeren Einflüssen, wie beispielsweise Stößen, Temperaturschwankungen, Verunreinigungen etc. dazu führen, dass die Lebensdauer derartiger Kapazitätssensoren eingeschränkt ist.

Ausgehend von diesem Stand der Technik liegt der vorliegenden Erfindung die Aufgabe zugrunde, ein Sensorelement zu schaffen, das einfach und kostengünstig herstellbar ist und darüber hinaus weitestgehend störungsunempfindlich gegenüber äußeren Einflüssen ist.

Diese Aufgabe wird durch ein Verfahren nach Anspruch 1 gelöst.

Der vorliegenden Erfindung liegt die Erkenntnis zugrunde, dass ein Sensorelement dadurch geschaffen werden kann, dass ein erstes Substratteil (Boden) mit einer ersten Elektrodenstruktur und ein zweites Substratteil (Deckel) mit einer zweiten Elektrodenstruktur durch einen Abstandshalter voneinander getrennt angeordnet werden, so dass sich ein Hohlraum zwischen der ersten und der zweiten Elektrodenstruktur ausbildet, wobei der Hohlraum seitlich von dem Abstandhalter begrenzt ist. Das erste und zweite Substratmaterial als auch der Abstandshalter können beispielsweise Leiterplatten oder auch Keramiksubstrate aufweisen, wobei die Verbindung zwischen dem ersten und dem zweiten Substratteil zu dem Abstandshalter mittels Löten erfolgt. Der Hohlraum kann anschließend mit einer dielektrischen Flüssigkeit gefüllt werden, so dass die erste und zweite Elektrodenstruktur mit der dazwischen befindlichen dielektrischen Flüssigkeit einen Kondensator bilden, deren Kondensatorfläche sich bei Neigung des Sensorelements verändert. Sofern die dielektrische Flüssigkeit eine andere Dielektrizitätskonstante als das verbleibende Medium (z. B. Luft) in dem Hohlraum auf-weist, kann aus der veränderten Kondensatorfläche die Neigung des Sensorelements bestimmt werden.

Um eine Erhöhung der Sensitivität zu erreichen kann es vorteilhaft sein, die Elektrodenstruktur derart zu wählen, dass eine Differenzial-Kapazitätsmessung ermöglicht wird. Dies ist beispielsweise dann der Fall, wenn die erste Elektrodenstruktur zwei elektrisch voneinander getrennte Teile aufweist, so dass zwei Kapazitätsmessungen - eine hinsichtlich des ersten Teils der ersten Elektrodenstruktur und eine unter Verwendung des zweiten Teils der ersten Elektrodenstruktur - vorgenommen werden können. Bei beiden Kapazitätsmessungen dient die zweite Elektrodenstruktur als zweite Elektrode.

Bei einem weiteren Ausführungsbeispiel, welches nicht Gegenstand der vorliegenden Erfindung ist, wird der Boden direkt mit dem Deckel verbunden, wobei entweder der Boden oder der Deckel eine Ausnehmung aufweist, so dass die Ausnehmung nach dem Verbinden des Bodens und des Deckels einen Hohlraum bildet. Der Boden weist wiederum die erste Elektrodenstruktur und der Deckel die zweite Elektrodenstruktur auf, so dass die erste und zweite Elektrodenstruktur durch den Hohlraum getrennt sind. Anschließend kann, wie bei dem Ausführungsbeispiel zuvor auch, der Hohlraum mit einer dielektrischen Flüssigkeit gefüllt werden, so dass sich eine neigungsabhängige Kapazität zwischen der ersten und zweiten Elektrodenstruktur herausbildet. Dabei ist es vorteilhaft, wenn nur ein Teil - z. B. die Hälfte - des Hohlraums mit der dielektrischen Flüssigkeit gefüllt wird und die dielektrische Flüssigkeit ferner derart gewählt wird, dass deren Dielektrizitätskonstante sich möglichst stark von der Dielektrizitätskonstante von Luft oder einem anderen im Hohlraum verbleibenden Medium unterscheidet. Alternativ kann der Hohlraum auch mit einer zwei-Komponenten Flüssigkeit gefüllt werden, wobei beide Komponenten nicht mischen und verschiedene Dielektrizitätskonstanten aufweisen. Oder aber die Luft wird nach dem Füllen aus dem Hohlraum herausgepumpt. Somit ließe sich die Korrosion der Elektrodenstrukturen unterdrücken.

Bei diesem Ausführungsbeispiel kann der Boden und/oder Deckel durch ein Kunststoffsubstrat in MID-Bauweise (MID = molded interconnect device) gebildet werden. Diese Kunststoffsubstrate sind beispielsweise Spritzgussgehäuse, die relativ einfach und kostengünstig in dreidimensionaler Bauweise herstellbar sind und darüber hinaus einfach mit Metallisierungen versehen werden können. Die Spritzgussgehäuse können beispielsweise in einer Zweikomponentenbauweise hergestellt werden, wobei eine Komponente metallisierbar ist und somit die an dem Spritzgussgehäuse auszubildende Elektrodenstruktur darstellen kann. Die andere Komponente kann beispielsweise ein Metall-abweisendes Material aufweisen.

Bei diesem Ausführungsbeispiel ist ebenfalls eine hybride Bauweise möglich, d. h. dass ein Spritzgussgehäuse in MID-Bauweise mit einer Ausnehmung beispielsweise den Boden mit der ersten Elektroden bildet und der Deckel mit der zweiten Elektrodenstruktur entweder durch eine Leiterplatte oder ein Keramiksubstrat gebildet wird. In Umkehrung davon kann auch der Deckel als MID-Bauteil ausgebildet sein.

Als mögliche Verbindungen des Bodens und des Deckels untereinander bzw. zu dem Abstandshalter kommen beispielsweise Löten, Kleben oder auch Laminieren in Betracht. Leiterplatten können dabei insbesondere durch Lötverbindungen oder auch Laminieren miteinander verbunden werden, währenddessen Keramiksubstrate als auch MID-Bauteile vorteilhafterweise über Klebverbindungen miteinander verbunden werden können. Eine Verwendung von Lötverbindungen kann insbesondere auch zur Justierung verwendet werden, wenn ein Reflow-Lötprozess angewendet wird. Erfindungsgemäß wird unter Verwendung eines Reflow-lötprozess eine flüssigkeitsdichte Verbindung zwischen dem Boden und dem Abstandshalter und zwischen dem Abstandshalter und dem Deckel ausgebildet, wobei das Justieren des Bodens und des Deckels ein Feinjustieren unter Verwendung des Reflow-Lötprozess umfasst. Der Reflow-Lötprozess bewirkt einen selbstzentrierenden Effekt, der darauf beruht, dass das flüssige Lötmaterial eine möglichst kleine Oberfläche annehmen will, so dass der entsprechende Kontraktionseffekt eine ringförmige Lotstelle in idealer Kreisform anstrebt. Eine weitere Justagehilfe kann darin bestehen, Justagestifte bereitzustellen, die unter Verwendung entsprechender Löcher in dem Boden und dem Deckel als auch in den Abstandshaltern zu einer groben Justierung führen kann, wobei die Feinjustage mittels des Reflow-Lötprozesses erfolgt Nach einem Ausbilden der (permanenten) Verbindung zwischen den Substratteilen bzw. zu den Abstandshaltern können die Justagestifte wieder aus den Löchern herausgezogen werden und für weitere Verbindungsprozesse genutzt werden.

Bei weiteren Ausführungsbeispielen sind der Boden und der Deckel als auch die Abstandshalter in einem Nutzenverband auf einem Substrat angeordnet, so dass nach dem Ausbilden des Hohlraumes und des Verbindens ein Trennen der dann fertig gestellten einzelnen Bauelemente erfolgen kann.

Das Auffüllen des Hohlraums mit der dielektrischen Flüssigkeit kann über eine Öffnung geschehen, die nach dem Füllen des Hohlraums bis zu einer bestimmten Marke, wieder verschlossen werden kann. Das Verschließen kann dabei beispielsweise mittels Löten, Kleben oder durch einen Pfropfen geschehen. Es ist ebenfalls möglich, dass das Auffüllen des Hohlraums mit der dielektrischen Flüssigkeit bereits vor dem Verbinden (z.B. Lötprozess) geschieht - beispielsweise wenn eines der Substratteile eine Ausnehmung aufweist, die mit der dielektrischen Flüssigkeit (teilweise) gefüllt werden kann.

Erfindungsgemäß umfasst das Verfahren zur Herstellung eines kapazitiven Sensors ein Anordnen eines Abstandshalters zwischen dem Boden (erstes Substratteil) mit einer ersten Elektrodenstruktur und dem Deckel (zweites Substratteil) mit einer zweiten Elektrodenstruktur , so dass zwischen der ersten und zweiten Elektrodenstruktur ein Hohlraum ausgebildet wird, der seitlich von einem Abstandshalter begrenzt wird. Das Verfahren weist ferner ein Ausbilden einer flüssigkeitsdichten Verbindung zwischen dem Boden und dem Abstandshalter als auch das Ausbilden einer flüssigkeitsdichten Verbindung zwischen dem Abstandshalter und dem Deckel auf. Eine flüssigkeitsdichte Verbindung impliziert dabei insbesondere, dass ein Auffüllen des Hohlraumes mit einer Flüssigkeit (z. B. dielektrische Flüssigkeit) geschehen kann, so dass die Flüssigkeit in dem Hohlraum verbleibt und nicht entweichen kann.

Nachfolgend werden die beiliegenden Zeichnungen näher erläutert. Sie zeigen:
- Fig. 1: eine Querschnittsansicht durch ein Sensorelement gemäß einem Ausführungsbeispiel der vorliegenden Erfindung;
- Fig. 2a bis 2c: Querschnittsansichten durch verschiedene Sensorelemente unter Verwendung verschiedener Substratmaterialien;
- Fig. 3a bis 3b: Querschnittsansichten durch ein Sensorelement in hybrider Bauweisen bezüglich der verwendeten Materialien;
- Fig. 4a bis 4d: Querschnittsansichten von Sensorelementen unter Nutzung verschiedener flüssigkeitsdichter Verbindungen;
- Fig. 5a bis 5c: Querschnittsansichten von Sensorelementen unter Nutzung verschiedener Justiermittel;
- Fig. 6a bis 6c: Querschnittsansichten von flüssigkeitsgefüllten Sensorelementen unter Nutzung verschiedener Verschlüsse für die Einfüllöffnung;
- Fig. 7: Raumansicht eines fertig prozessierten Sensorelements;
- Fig. 8: ein Schnitt durch die Raumansicht der Fig. 7;
- Fig. 9a bis 9h: Querschnittsansichten einer Prozessfolge zur Herstellung eines Sensorelements;
- Fig. 10: eine Anordnung von Sensordeckel und Sensorboden im Nutzen; und
- Fig. 11: eine Anordnung von Abstandshalter im Nutzen.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibung dieser Funktionselemente in den verschiedenen Ausführungsbeispielen untereinander austauschbar sind.

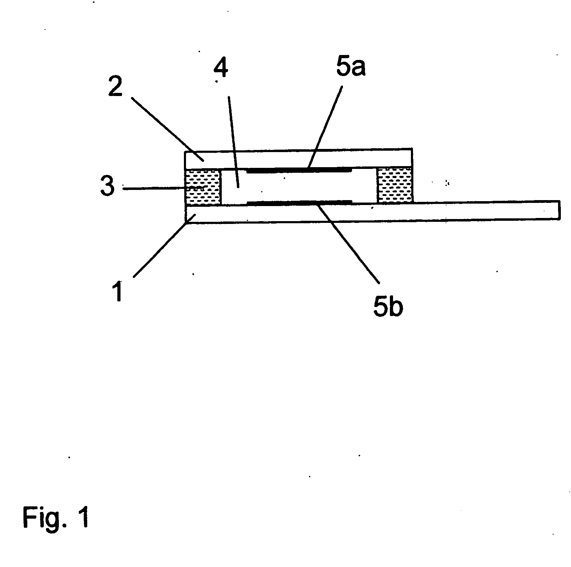

Fig. 1 zeigt eine Querschnittsansicht durch ein Sensorelement mit einem Boden 1, einem Deckel 2 und einem Abstandshalter 3, wobei der Abstandshalter 3 zwischen dem Boden 1 und dem Deckel 2 angeordnet ist, so dass sich ein Hohlraum 4 zwischen dem Boden 1 und dem Deckel 2 und dem Abstandshalter 3 herausbildet. Ferner weist der Boden 1 eine erste Elektrodenstruktur 5b und der Deckel 2 eine zweite Elektrodenstruktur 5a auf, die auf gegenüberliegenden Seiten des Hohlraums 4 angeordnet sind. Die erste Elektrodenstruktur 5b und die zweite Elektrodenstruktur 5a sind elektrisch voneinander isoliert, so dass sich bei einem Füllen des Hohlraums 4 mit einer dielektrischen Flüssigkeit ein Kondensator herausgebildet wird, deren Kapazität von der Kondensatorfläche bestimmt wird. Die Kondensatorfläche wird dabei durch jenen lateralen Bereich gebildet, entlang dessen die erste Elektrodenstruktur 5b und die zweite Elektrodenstruktur 5a durch die dielektrische Flüssigkeit (in der Figur nicht gezeigt) getrennt sind. In einer Draufsicht ist die Kondensatorfläche durch jene Fläche gegeben, über die sich die erste und zweite Elektrodenstruktur 5b, 5a überlappen.

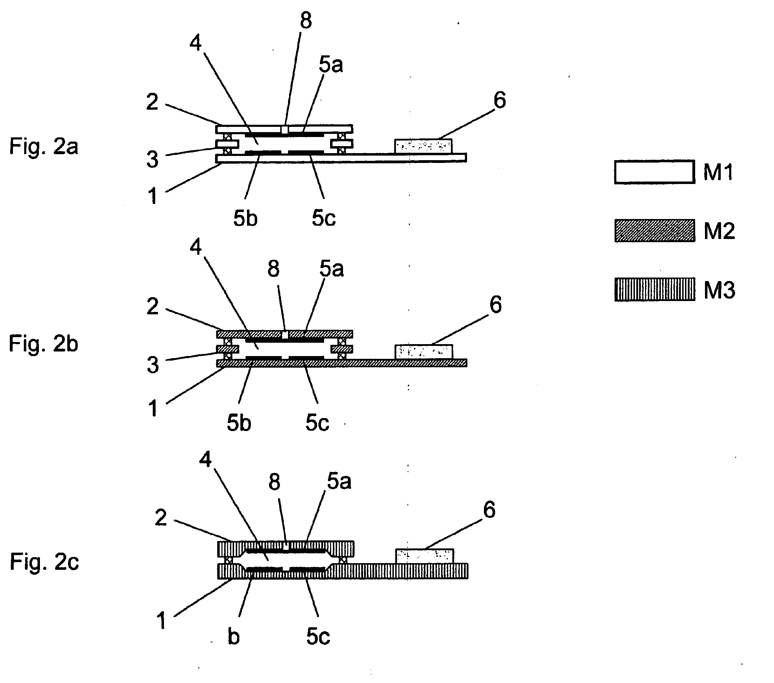

Die Fig. 2a bis 2c zeigen weitere Ausführungsbeispiele, bei denen verschiedene Materialien verwendet werden.

Fig. 2a zeigt ein Ausführungsbeispiel, bei dem beispielsweise Leiterplatten M1 zur Anwendung kommen. Dabei ist sowohl der Boden 1 (oder erstes Substratteil) als auch der Deckel 2 (oder zweites Substratteil) durch eine Leiterplatte M1 gebildet. Der Boden 1 weist die erste Elektrodenstruktur 5b/c und der Deckel 2 die zweite Elektrodenstruktur 5a auf, wobei in dem Ausführungsbeispiel aus Fig. 2a die erste Elektrodenstruktur eine erste Komponente 5b und eine zweite Komponente 5c aufweist, die voneinander elektrisch isoliert sein können. Ferner weist der Deckel 2 eine Öffnung 8 auf, durch die der Hohlraum 4 in einem späteren Prozessschritt mit einer dielektrischen Flüssigkeit oder einem anderen dielektrischen Material gefüllt werden kann. Außerdem ist auf dem Boden 1 (oder in dem entsprechenden Substratteil) eine Auswerteeinheit oder Auswerteschaltung 6 ausgebildet, die dazu genutzt werden kann, die Differenzkapazitätsmessung entsprechend auszuwerten. Die Differenzkapazitätsmessung kann beispielsweise hinsichtlich einer ersten Kapazität und einer zweiten Kapazität vorgenommen werden, wobei die erste Kapazität zwischen der zweiten Elektrodenstruktur 5a und der ersten Komponente der ersten Elektrodenstruktur 5b gemessen werden kann. Dementsprechend kann die zweite Kapazität zwischen der zweiten Elektrodenstruktur 5a und der zweiten Komponente der ersten Elektrodenstruktur 5c gemessen werden.

Fig. 2b zeigt ein weiteres Ausführungsbeispiel, bei dem anstatt der Leiterplatten M1, wie es in Fig. 2a gezeigt ist, Keramiksubstrate verwendet werden. Somit ist der Boden 1 als auch der Deckel 2 in diesem Ausführungsbeispiel durch ein Keramiksubstrat M2 gebildet. Ferner ist möglich, dass der Abstandshalter 3 ebenfalls ein Keramikmaterial aufweist. Alle weiteren Elemente des in Fig. 2b gezeigten Sensorelements entsprechen den Elementen des Sensorelements aus Fig. 2a, so dass eine wiederholte Beschreibung hinfällig ist.

Fig. 2c zeigt ein Ausführungsbeispiel, bei dem auf einen Abstandshalter 3 verzichtet werden kann. Bei diesem Ausführungsbeispiel ist der Boden 1 als auch der Deckel 2 durch ein Kunststoffsubstrat M3 gebildet. Der Boden 1 weist eine Ausnehmung auf, in der die erste und zweite Komponente der ersten Elektrodenstruktur 5b und 5c ausgebildet sind. Ferner weist der Deckel 2 eine Ausnehmung auf, in der die zweite Elektrodenstruktur 5a ausgebildet ist. Die Ausnehmungen in dem Boden 1 und dem Deckel 2 sind dabei derart ausgestaltet, dass ein Hohlraum 4 sich zwischen der ersten Elektrodenstruktur 5b/c und der zweiten Elektrodenstruktur 5a herausbildet. Der Hohlraum 4 kann später mit einem dielektrischen Material (z. B. dielektrische Flüssigkeit) zumindest teilweise gefüllt werden.

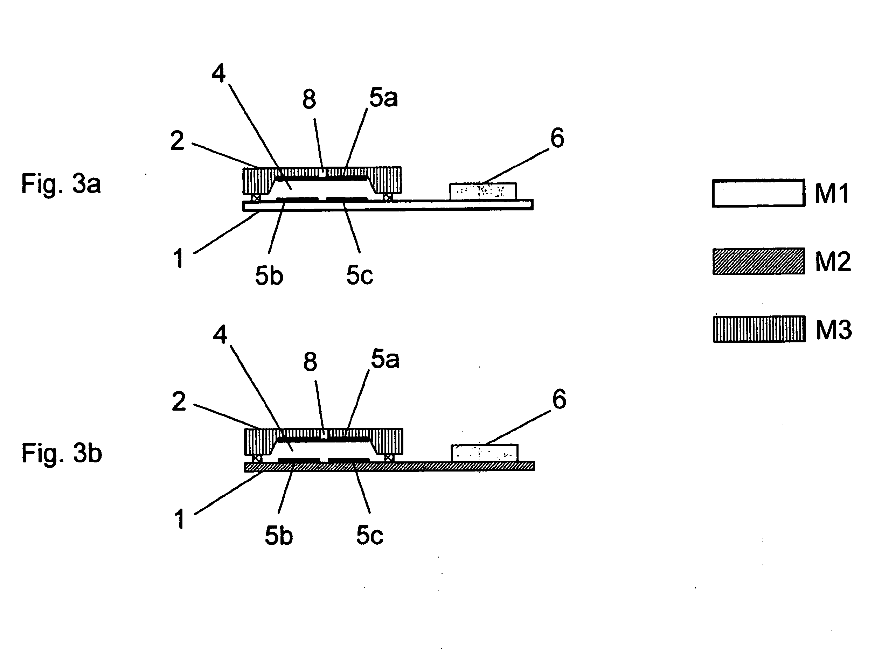

Fig. 3 zeigt zwei mögliche hybride Gestaltungsweisen von Sensorelementen. In Fig. 3a ist beispielhaft ein Sensorelement gezeigt, bei dem der Boden 1 z. B. durch eine Leiterplatte M1 und der Deckel durch ein Kunststoffsubstrat M3 mit einer Ausnehmung gebildet wird. Bei dieser hybriden Bauweise kann ebenfalls auf Abstandshalter 3 verzichtet werden, da das Kunststoffsubstrat M3 (in diesem Fall der Deckel 2) bereits eine Ausnehmung aufweist, in der die zweite Elektrodenstruktur 5a ausgebildet werden kann.

Fig. 3b zeigt ein weiteres Ausführungsbeispiel für eine Kombination der Materialien, bei dem der Boden 1 durch ein Keramiksubstrat M2 und der Deckel 2 durch ein Kunststoffbauteil M3 (z. B. in MID-Bauweise) mit einer Ausnehmung gebildet wird. In beiden in Fig. 3a und 3b gezeigten Ausführungsbeispielen kann der Boden 1 wiederum eine Auswerteeinheit 6 aufweisen, die zur Bestimmung der Neigung aus der Kapazitätsmessung genutzt werden kann.

Somit ist ein gemischter Aufbau aus verschiedenen Materialien denkbar, wobei die oben genannten Materialien beliebig gemischt werden können (z.B. Boden 1 als Kunststoffsubstrat M3 und Deckel 2 aus einem anderen Material). Die in Fig. 3a und 3b gezeigten Varianten sind insbesondere vorteilhaft, da der Boden 1 als Leiterplatte M1 oder als Keramikmaterial ausgebildet ist und somit vorteilhafterweise eine planare Oberfläche aufweist. Andererseits eröffnet der Deckel 2 einen breiten Gestaltungsspielraum, sofern er als Kunststoffsubstrat M3 in MID-Bauweise ausgeführt wird.

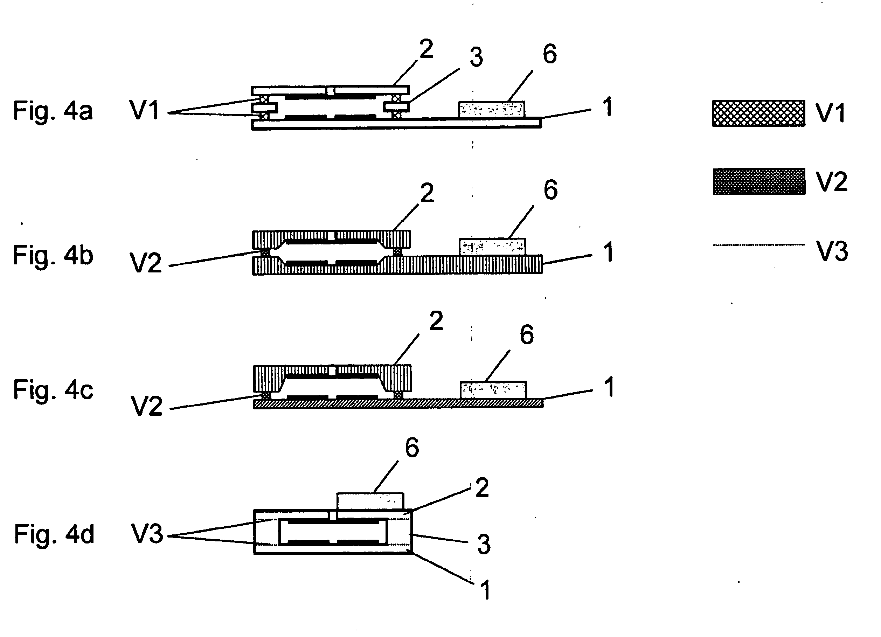

Die Fig. 4a bis 4d zeigen weitere Ausführungsbeispiele, die sich durch verschiedene Verbindungsverfahren unterscheiden, wobei hierbei beispielhaft Löten V1, Kleben V2 und Laminieren V3 zur Anwendung kommen.

Fig. 4a zeigt ein Beispiel für eine Lötverbindung V1 zwischen dem Boden 1 und dem Abstandshalter 3 einerseits und einer Lötverbindung V1 zwischen dem Deckel 2 und dem Abstandshalter 3 andererseits. Die Verwendung einer Lötverbindung V1 ist insbesondere bei der Verwendung von Leiterplatte M1 für den Boden 1 und den Deckel 2 vorteilhaft, kann jedoch auch bei anderen Substratmaterialien genutzt werden.

Die Fig. 4b zeigt ein Ausführungsbeispiel für das Herstellen einer Verbindung zwischen dem Boden 1 und dem Deckel 2 mittels einer Klebverbindung V2, wobei in den in Fig. 4b gezeigten Ausführungsbeispiel der Boden 1 und der Deckel 2 durch Kunststoffbauteile M3 gebildet werden, so dass bei diesem Ausführungsbeispiel auf die Verwendung eines Abstandshalters 3 verzichtet werden kann. Das gezeigte Sensorelement entspricht somit dem in Fig. 2c gezeigten Sensorelement.

Fig. 4c zeigt ein weiteres Sensorelement, bei dem der Boden 1 und der Deckel 2 miteinander verklebt werden, wobei wiederum auf die Verwendung eines Abstandshalters 3 verzichtet werden kann, da der Deckel 2 wie auch bei dem Ausführungsbeispiel aus Fig. 4b durch ein Kunststoffbauteil M3 gebildet wird.

Fig. 4d zeigt ein Ausführungsbeispiel für ein Laminieren V3, bei dem ein Abstandshalter 3 zwischen dem Boden 1 und dem Deckel 2 angeordnet wird, und die Verbindung mittels Laminieren hergestellt wird. Das Laminieren V3 ist insbesondere vorteilhafterweise nutzbar, wenn für den Boden 1 und den Deckel 2 Leiterplatten verwendet werden und auch für den Abstandshalter 3 Leiterplatten zum Einsatz kommen. Wie bei diesem Ausführungsbeispiel gezeigt, kann die Auswerteeinheit 6 auch auf dem Deckel 2 ausgebildet sein, während bei den Ausführungsbeispielen in Fig. 4a-c die Auswerteeinheit 6 auf dem Boden1 angeordnet war.

Der Verfahrensablauf zum Herstellung einer Verbindung mittels Löten V1 kann dabei wie folgt geschehen. Die Lotpaste wird zunächst an den Verbindungsstellen auf dem Boden 1 und dem Deckel 2 aufgebracht (z. B. ringförmig). Anstelle einer Lotpaste kann ebenfalls eine Lot-Preform (d. h. ein Festkörper) verwendet werden, wobei der Lot-Preform beispielsweise ringförmig ausgestanzt sein kann, so dass er die gewünschte Form von den zu verbindenden Teilen hat. Nach dem Aufbringen des Lots werden der Boden 1, der Deckel 2 und der Abstandshalter 3 übereinander angeordnet und in einem darauf folgenden beispielhaften Reflow-Lötprozess kann das Lot aufgeschmolzen werden und verbindet die Fügepartner stoffschlüssig.

Der Verfahrensablauf zur Herstellung der Verbindung unter Verwendung einer Klebeverbindung V2 läuft im Prinzip identisch ab, wobei anstelle des Reflow-Lötens ein Aushärteprozess stattfindet, bei dem sich beispielsweise der aufgetragene Kleber (z. B. in flüssiger Form oder als Paste) vernetzt und somit ebenfalls eine stoffschlüssige Verbindung zwischen den Fügepartnern hergestellt werden kann.

Der Verfahrensablauf bei der Herstellung einer Verbindung mittels Laminieren V3 kann insbesondere dahingehend optimiert werden, dass für den Boden 1 und den Deckel 3 eine Leiterplatte M1 verwendet wird - oder besser noch eine mehrlagige Leiterplatte. Diese Leiterplatten M1 können bereits vorgeformt und teilweise metallisiert sein (so genannte Prepregs) und der mit diesem Verfahren hergestellte Hohlraum 4 kann als ein überdimensionierter so genannter buried via (vergrabene Durchkontaktierung) betrachtet werden. Die Ausmaße bzw. die Höhe des Hohlraums kann dabei insbesondere durch die Anzahl der Lagen der Leiterplatten M1 entsprechend angepasst werden. Der entstandene Hohlraum wird anschließend noch befüllt und verschlossen (z. B. mit einer dielektrischen Flüssigkeit bis zu einer vorbestimmten Marke).

Bei dem mittels Laminieren V3 hergestellten Sensorelement, wie es in der Fig. 4d gezeigt ist, kann die Auswerteeinheit 6 ebenfalls an dem Deckel 2 angeordnet sein, so dass eine kompaktere Bauweise des Sensorelements ermöglicht wird.

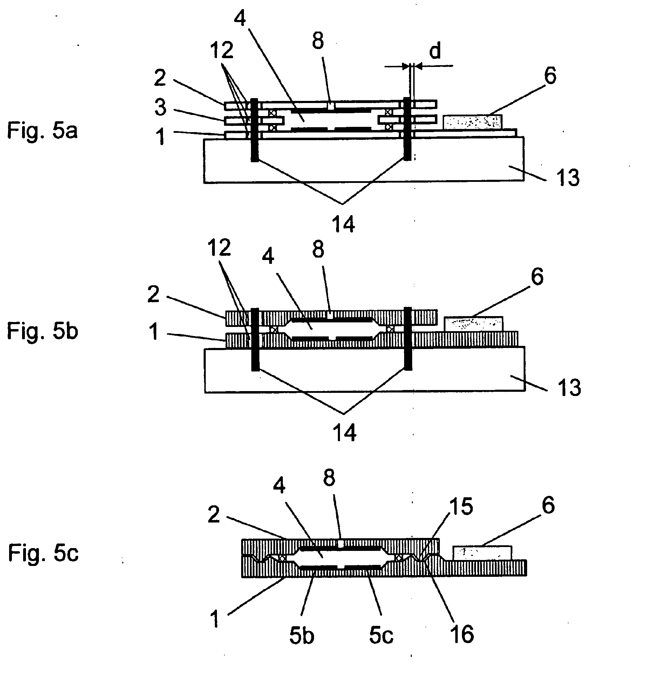

Die Fig. 5a bis 5c zeigen Ausführungsbeispiele, die verschiedene Möglichkeiten der Positionierung des Bodens 1, des Deckels 2 und des Abstandshalters 3 nutzen. Ein Einstellen der relative Positionierung, insbesondere des Bodens 1 im Vergleich zum Deckel 2, ist deshalb wünschenswert, da dadurch die Kondensatorfläche zwischen der ersten Elektrodenstruktur 5b und der zweiten Elektrodenstruktur 5a definiert wird. Sofern nämlich die erste Elektrodenstruktur 5b und die zweite Elektrodenstruktur 5a lateral zueinander versetzt sind und nur teilweise übereinander angeordnet sind, führt dies bei Messung der Kapazität oder der Differenzkapazität während einer Neigung des Sensorelements dazu, dass die effektive Kondensatorfläche verringert wird und demzufolge die Sensitivität des Sensorelements eingeschränkt wird oder das Ergebnis verfälscht wird. Die effektive Kondensatorfläche ist dabei (wie oben beschrieben) jene laterale Fläche der ersten und zweiten Elektrodenstruktur 5b, 5a entlang derer die erste und zweite Elektrodenstruktur durch die dielektrische Flüssigkeit voneinander getrennt sind.

Fig. 5a zeigt eine relative Positionierung unter Verwendung von Führungsstiften 14, die in einer Aufnahmeplatte 13 fixiert sind. Bei dem hier gezeigten Ausführungsbeispiel weisen der Boden 1, der Deckel 2 und der Abstandshalter 3 jeweils Bohrungen 12 auf, die derart ausgebildet sind, dass der Boden 1, der Deckel 2 und der Abstandshalter 3 auf die Aufnahmeplatte 13 mit den Führungsstiften 14 aufgesetzt werden können. Dabei wird zunächst der Boden 1 auf die Aufnahmeplatte 13 aufgebracht, so dass die Führungsstifte 14 durch die Bohrungen 12 hindurchragen. Vorteilhafterweise weisen die Bohrungen 12 einen größeren Durchmesser auf als die Führungsstifte 14, so dass z. B. der Radius der Bohrungen 12 die Führungsstifte 14 um einen Betrag d überragt. Die Bohrungen 12 können in dem Boden 1, dem Deckel 2 und dem Abstandshalter 3 unterschiedlich dick ausgebildet sein, so dass der Betrag d für den Boden 1, den Deckel 2 und den Abstandshalter 3 einen unterschiedlichen Wert aufweist (d1 für den Boden 1, d2 für den Deckel 2, d3 für den Abstandshalter 3).

Die Justierung kann beispielsweise derart erfolgen, dass zunächst das Sensorelement zusammengesetzt wird und zwar derart, dass die Abstandshalter zwischen dem Boden 1 und dem Deckel 2 angeordnet sind und beispielsweise Lotmaterial V1 zwischen den Abstandshalter 3 und dem Boden 1 als auch zwischen dem Abstandshalter 3 und dem Deckel 2 angeordnet ist. Bei der Anordnung der Elemente kann z. B. eine Grobjustierung dadurch erfolgen, dass ein Aufsetzen des Sensorelements auf die Aufnahmeplatte 13 mit den Führungsstiften 14 erfolgen kann und die Führungsstifte 14 durch die Bohrungen 12 hindurch ragen. Das bis dahin fertig gestellte Sensorelement kann nun beispielsweise über eine entsprechende Erwärmung verlötet werden, wobei erfundungsgemäß der oben beschriebene Reflow-Lötprozess zu einer Feinjustierung der einzelnen Elemente (des Bodens 1, des Deckels 2 und des Abstandshalters 3) führt.

Fig. 5b zeigt ein Ausführungsbeispiel, bei dem wiederum auf den Abstandshalter 3 verzichtet werden kann, wobei der Boden 1 als auch der Deckel 2 durch ein Kunststoffbauteil ausgebildet ist, welches wiederum Bohrungen 12 (beispielsweise mit variablen Durchmesser) für den Boden 1 und den Deckel 2 aufweisen kann. Der Boden 1 kann beispielsweise auf die Aufnahmeplatte 13 zunächst aufgebracht werden, daran anschließend kann das Klebematerial V2 aufgebracht werden und schließlich wird der Deckel 2 aufgesetzt, so dass die Bohrungen 12 die Führungsstifte 14 aufnehmen.

Fig. 5c zeigt ein weiteres Ausführungsbeispiel für eine Justierung des Bodens 1 relativ zu dem Deckel 2, wobei bei diesem Ausführungsbeispiel eine Justierung mittels einer Vertiefung 16 in dem Boden 1 und einer Zentriermarke 15 in dem Deckel 2 erfolgt und zwar dann, wenn ein Herstellen der Verbindung unter Anwendung eines Druckes zwischen dem Boden 1 und dem Deckel 2 erfolgt. Bei dem in Fig. 5c gezeigten Ausführungsbeispiel ist der Boden 1 und der Deckel 2 wiederum durch ein Kunststoffbauteil M3 mit einer Ausnehmung ausgebildet und die Verbindung kann beispielsweise mittels einer Klebverbindung V2 erfolgen.

Somit kann sich eine mögliche relative Positionierung in Abhängigkeit von dem genutzten Verbindungsverfahren unterscheiden. Sofern ein Löten V1 oder Kleben V2 zur Anwendung kommt, kann eine Justierung mittels Führungsstifte auf eine Aufnahmeplatte 13 realisiert werden, auf welche die zu fügenden Elementen (Boden 1, Deckel 2 und gegebenenfalls Abstandshalter 3) mit dem darauf aufgebrachten Lot bzw. Kleber aufgesteckt werden. Hierfür können die zu fügenden Elemente entsprechend mit Bohrungen 12 versehen werden, wobei der Durchmesser der Bohrungen 12 für die einzelnen Elemente unterschiedlich sein kann, d. h. der Innendurchmesser Bohrung für den Boden 1 kann sich von dem Innendurchmesser der Bohrung des Deckels 2 unterscheiden. Vorteilhafterweise wird der Innendurchmesser der Bohrungen 12 dabei etwas größer gewählt als der Außendurchmesser der Führungsstifte 14, so dass ein Spalt mit einer Spaltbreite d entsteht. Das hat den Vorteil, dass dabei einzelne Substrate sich gegeneinander etwas verschieben können. Im anschließenden Reflow-Lötprozess tritt dann ein selbstzentrierender Effekt auf, da das flüssige Lot eine kleine Oberfläche annehmen möchte und deshalb bestrebt ist, die ringförmige Lotstelle in eine ideale Kreisform zu bringen. Bei diesem Reflow-Lötprozess kann gleichzeitig auch eine Bestückung des Bodens 1 mit den erforderlichen Bauteilen für die Ausleseschaltung (Auswerteeinheit 6) erfolgen. Die Bohrungen 12 brauchen dabei nicht rund sein, sondern können bei anderen Ausführungsbeispielen auch eine andere Form (oval, viereckig, etc.) aufweisen.

Sofern eine Verbindung mittels Kleben V2 in Kombination mit einem Kunststoffsubstratmaterial M3 (MID-Bauteil) erfolgt, kann, wie oben beschrieben, die Justierung auf mechanischer Art und Weise geschehen. Dazu können auf zumindest einem Fügepartner (Boden 1 oder Deckel 2) Zentriermarken 15 angebracht werden, die auf dem Gegenstück in eine entsprechende Vertiefung 16 oder einem Loch eingreifen, so dass eine exakte Positionierung der zu fügenden Bauteile zueinander gewährleistet wird, insbesondere dann, wenn Druck zur Ausbildung der Verbindung angewendet wird.

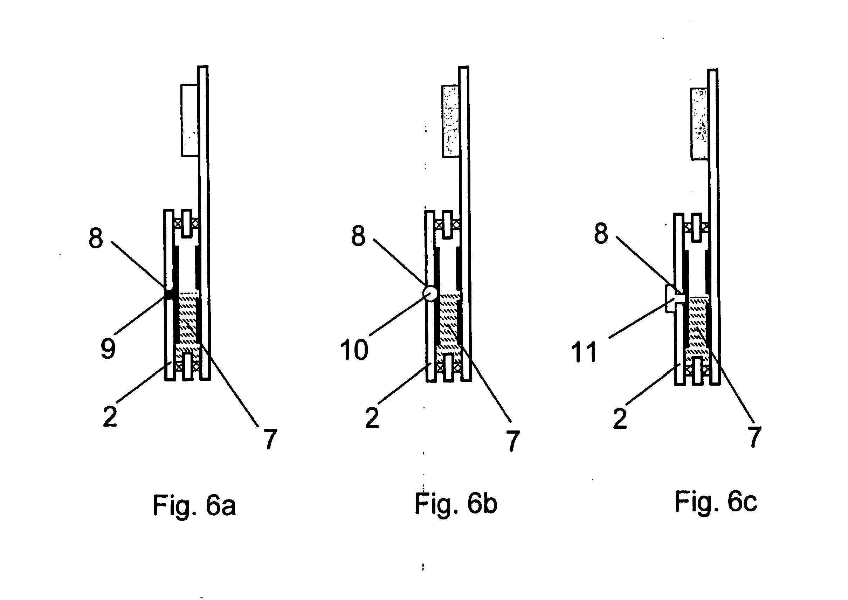

Die Fig. 6a bis 6c zeigen verschiedene Ausführungsbeispiele zum Verschließen der Öffnung 8, die zum Auffüllen des Hohlraums 4 mit einem dielektrischen Medium (z. B. einer dielektrischen Flüssigkeit) genutzt werden kann. Die dielektrische Flüssigkeit 7 kann beispielsweise Silikonöl aufweisen und das Auffüllen kann beispielsweise bis zu einem vorbestimmten Anteil des Hohlraums 4 (z. B. der Hälfte) erfolgen.

Fig. 6a zeigt ein Ausführungsbeispiel, bei dem die Öffnung 8 mit einem Lot 9 verschlossen wird, Fig. 6b zeigt ein Ausführungsbeispiel, bei dem die Öffnung 8 mit einer Kugel 10, die beispielsweise unter Druck in die Öffnung 8 hineingepresst wird, verschlossen wird. Ein weiteres Ausführungsbeispiel zeigt die Fig. 6c, bei dem die Öffnung 8 mit einem Stopfen 11 verschlossen wird, wobei der Stopfen 11 ausgebildet ist, nach dem Einbringen in die Öffnung 8 eine haltbare Verbindung mit dem Deckel 2 zu bilden.

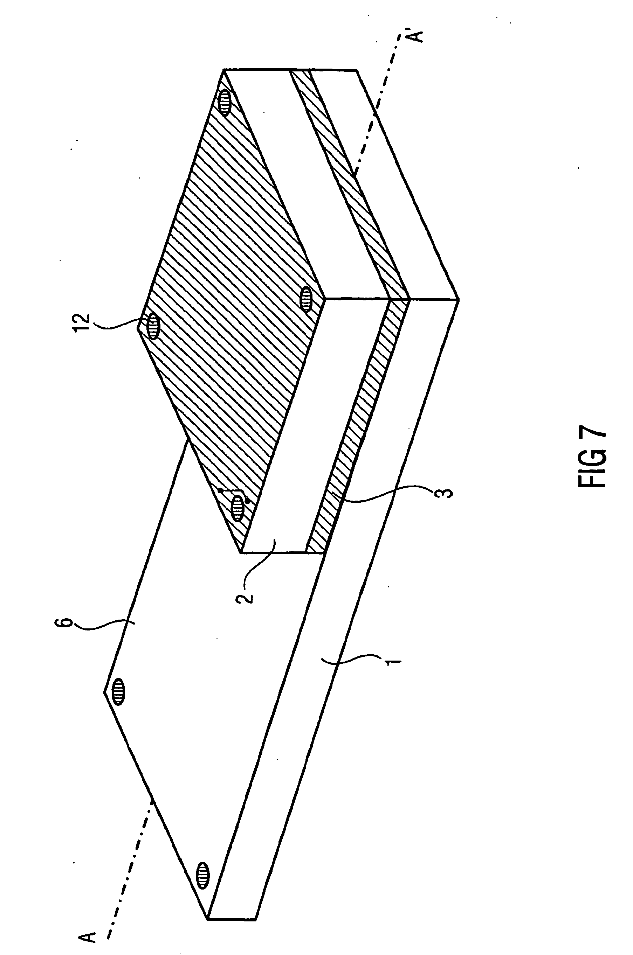

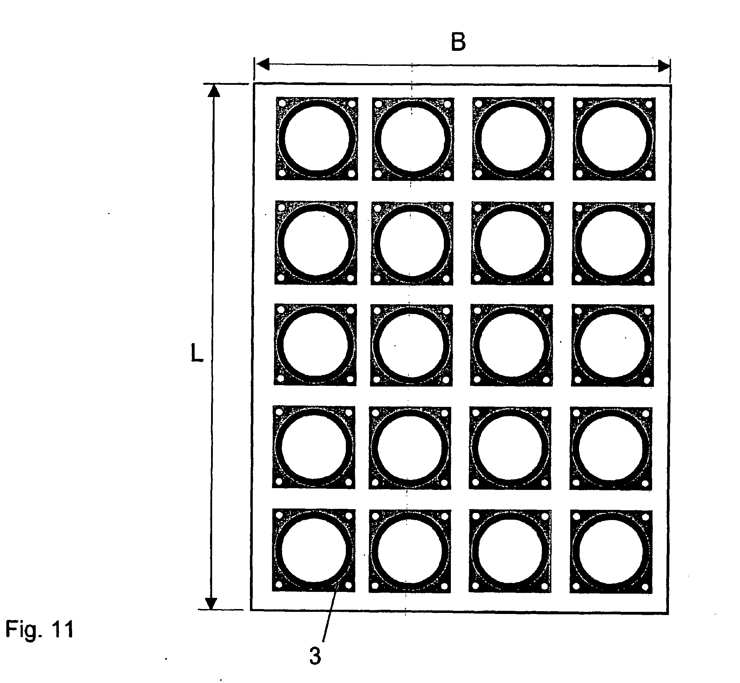

Im Folgenden wird anhand der Fig. 7 bis zur Fig. 11 eine mögliche Prozessierung des kapazitiven Neigungssensors (Sensorelement) auf der Basis von Leiterplatten (Leiterplatten-Sensor) näher erläutert. Neben einem möglichen Prozessablauf zur Fertigung der Leiterplatten-Sensoren wird ebenfalls eine mögliche Anordnung der Leiterplatten im Nutzenverband beschrieben.

Fig. 7 zeigt einen fertig prozessierten kapazitiven Neigungssensor auf der Basis von Leiterplatten. Fig. 7 zeigt den Boden 1, auf dem der Abstandshalter 3 aufgebracht ist, und abschließend ein Deckel 2 auf den Abstandshalter 3 angeordnet ist. Neben dieser Schichtenordnung kann lateral seitlich versetzt die Auswerteschaltung 6 auf oder in dem Boden 1 ausgebildet werden. In dem in Fig. 7 gezeigten Ausführungsbeispiel ist die Auswerteschaltung 6 nicht explizit gezeigt, sondern ist nur der Platz gezeigt, auf dem die Auswerteschaltung 6 ausgebildet werden kann. Ferner zeigt die Fig. 7 die Öffnungen 12, die, wie in der Fig. 5a und 5b beschrieben, zur Justierung der einzelnen Elemente (Boden 1, Deckel 2, Abstandshalter 3) genutzt werden können.

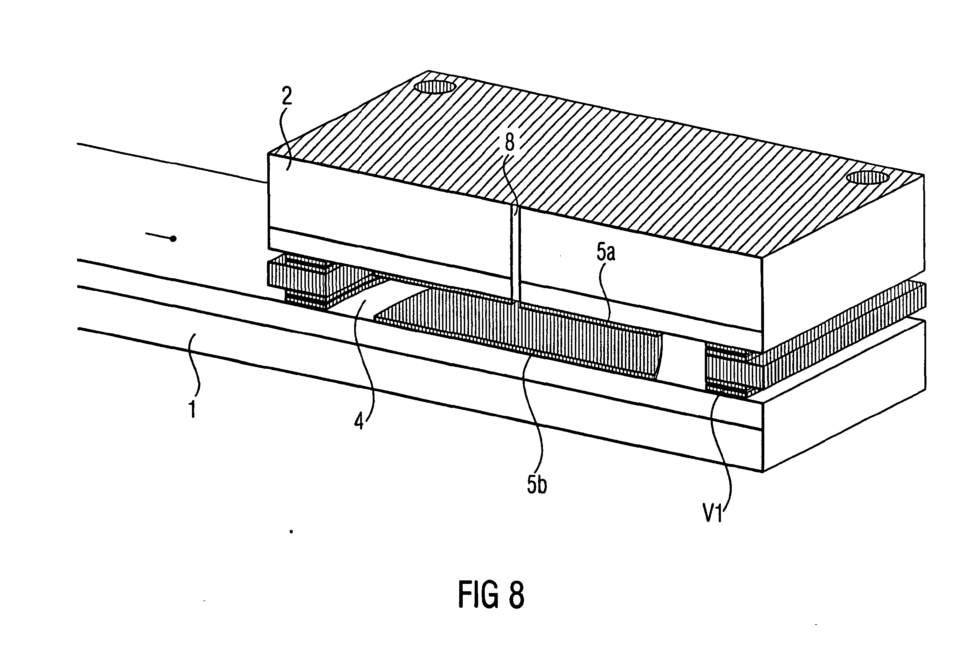

Fig. 8 zeigt einen Schnitt durch den in Fig. 7 gezeigten kapazitiven Neigungssensor entlang der Schnittlinie AA'.

Der Schnitt ist dabei derart ausgeführt, dass die Befüllungsöffnung 8 in dem Deckel 2 sichtbar wird. Ferner zeigt der Schnitt den Hohlraum 4, der zwischen dem Boden 1 und dem Deckel 2 ausgebildet ist und seitlich durch den Abstandshalter 3 begrenzt wird. Bei dem hier gezeigten Ausführungsbeispiel ist der Boden 1, der Abstandshalter 3 und der Deckel 2 beispielsweise durch eine Lötverbindung V1 miteinander verbunden, wobei das Lot V1 sichtbar ist. Ferner zeigt die Fig. 8 die erste Elektrodenstruktur 5b, die auf dem Boden 1 ausgebildet ist, und die zweite Elektrodenstruktur 5a, die auf dem Deckel ausgebildet ist.

Der Boden 1 und der Deckel 2 können beispielsweise durch eine 3-lagige Leiterplatte M1 ausgebildet sein und der Abstandshalter 3 kann z.B. 2-lagig ausgebildet werden. Die einzelnen Lagen beziehen sich dabei auf Leiterplatten, die übereinander angeordnet und miteinander verbunden werden, so dass sich eine gewünschte Schichtdicke der einzelnen Elemente (Boden 1, Deckel 2, Abstandshalter 3) ausbildet. Somit ist es möglich, das Volumen des Hohlraums 4 insbesondere dadurch zu verändern, dass der Abstandshalter 3 weite-re Lagen aufweist. Es kann dabei vorteilhaft sein, dass der Hohlraum 4 ausreichend groß gewählt ist bzw. dass die Schichtdicke des Abstandshalters 3 ausreichend groß gewählt ist, um unerwünschte Randeffekte (beispielsweise Adhäsion, Benetzung, Kapillarwirkung, etc.) zu unterdrücken.

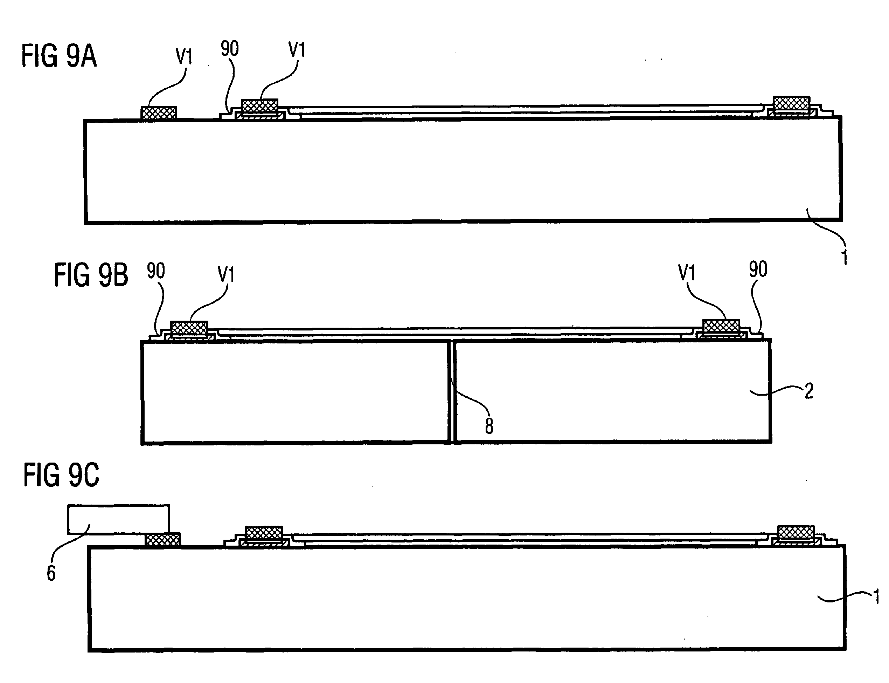

Die Fig. 9a bis 9h beschreiben einen möglichen Prozessablauf zur Fertigung eines Leiterplattensensors (kapazitiven Sensor basierend auf Leiterplatten).

Fig. 9a zeigt einen ersten Prozessschritt, bei dem auf dem Boden 1 (Sensorboden-Element) die Lotpaste V1 aufgebracht wird. Das Aufbringen der Lotpaste V1 kann dabei beispielsweise ein Aufbringen von verschiedenen Lotmaterialien (mehrere Komponenten) als auch ein zur seitlichen Fixierung des Lotmaterials V1 dienende Unterstützungsmaterial 90 umfassen. Das Lotmaterial V1 (und das Unterstützungsmaterial 90) können dabei beispielsweise ringförmig auf dem Boden 1 aufgebracht werden, was insbesondere dann vorteilhaft ist, wenn der gewünschte Hohlraum 4 eine kreisförmige Gestalt aufweisen soll.

Fig. 9b zeigt den Deckel 2 mit der Füllöffnung 8, auf dem ebenfalls Lotmaterial V1 aufgebracht wird, welches wiederum seitlich durch Unterstützungsmaterial 90 fixiert werden kann. Das Unterstützungsmaterial 90 ist insbesondere dann vorteilhaft, wenn zur Ausbildung der Lotverbindung ein höherer Druck erforderlich ist und es vermieden werden soll, dass bei Anwendung des höheren Drucks das Lotmaterial V1 seitlich oder lateral herausgedrückt wird, wodurch der einwirkende Druck begrenzt wird oder Lotmaterial in dem Hohlraum 4 hineingelangt.

Fig. 9c zeigt, wie in einem Folgeschritt der Boden 1 durch elektrische Bauteile bestückt werden kann, wobei beispielhaft in Fig. 9c das Aufbringen der Auswerteschaltung 6 gezeigt ist.

Sowohl das Aufbringen des Lotmaterials V1 auf dem Boden 1 und auf dem Deckel 2 als auch das Bestücken des Bodens 1 mit der Auswerteschaltung 6 kann im Nutzenverband geschehen, d. h. es kann gleichzeitig für eine Vielzahl von Bodenelementen 1 und für eine Vielzahl von Deckelelementen 2 geschehen, die nebeneinander auf einem Substrat (im Nutzen) angeordnet sind und später vereinzelt werden.

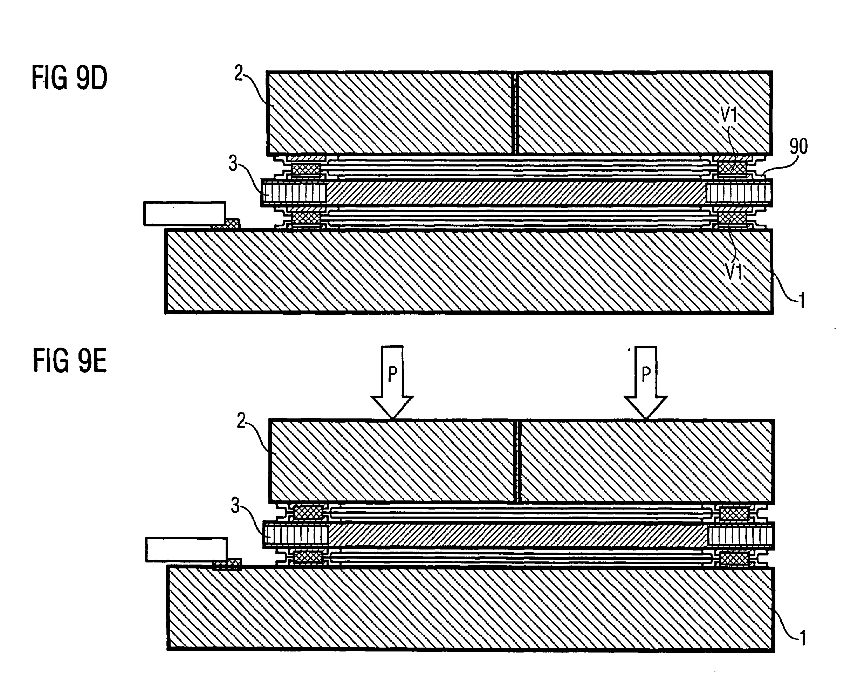

Fig. 9d zeigt den Folgeprozessschritt, in dem der Deckel 2 und der Boden 1, die durch den Abstandshalter 3 getrennt sind, aufeinander angeordnet werden. Die Anordnung erfolgt beispielsweise derart, dass das auf dem Boden 1 und auf dem Deckel 2 aufgebrachte Lotmaterial V1 auf gegenüberliegenden Seiten des Abstandshalters 3 angeordnet sind. Der Abstandshalter 3 kann dabei ebenfalls Fixierungsmaterial 90 aufweisen, welches dazu dienen kann, dass bei der folgenden Druckaufwendung das Lotmaterial V1 räumlich fixiert bleibt und nicht seitlich aus dem Stapel (Boden 1, Deckel 2 und Abstandshalter 3) herausgedrückt wird. Dazu kann das Fixierungsmaterial 90 auch bis zu einem bestimmten Grad komprimierbar/deformierbar sein, wobei der Grad den Druck bestimmt. Bei dem in Fig. 9d gezeigten Anordnen der einzelnen Elemente ist im Weiteren darauf zu achten, dass die in dem Stapel angeordneten Boden 1, Deckel 2 und Abstandshalter 3 entsprechend ausgerichtet werden - beispielsweise wie es in der Fig. 5 beschrieben wurde (beispielsweise unter Nutzung der Führungsstifte 14).

Fig. 9e zeigt als Folgeschritt der Prozessierung des Sensorelements, wie unter Aufwendung eines Druckes P ein Verlöten der einzelnen Elemente (Boden 1, Deckel 2 und Abstandshalter 3) erfolgt. Das Verlöten kann beispielsweise in einem Reflow-Ofen geschehen, wobei der Reflow-Prozess darauf basiert, dass das Lotmaterial V1 eine möglichst kleine Oberfläche annehmen möchte und deshalb eine kreisrunde Form bevorzugt, so dass sich der Boden 1 relativ zum Deckel 2 selbst justieren kann.

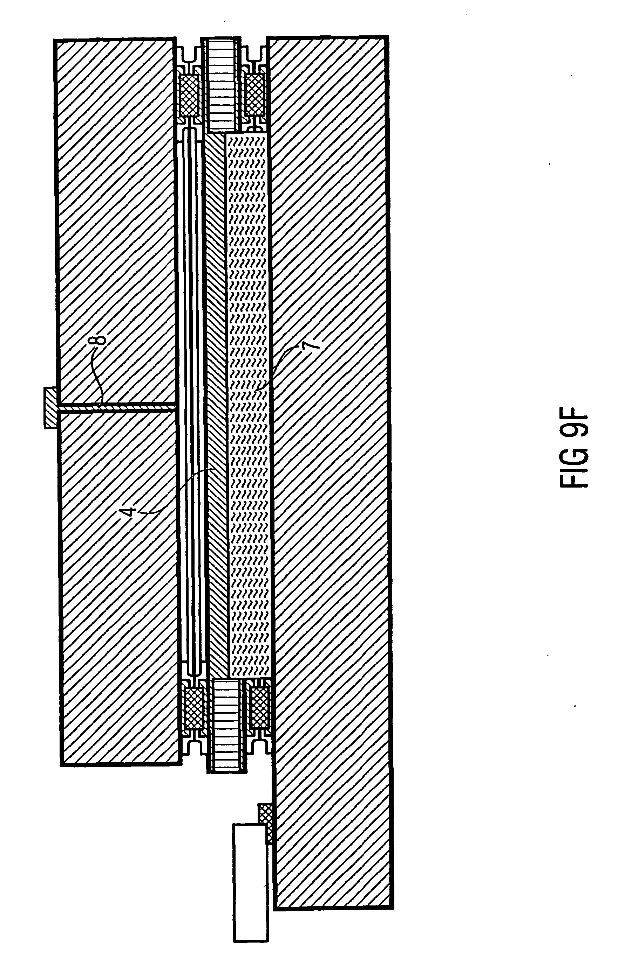

Fig. 9f zeigt, wie nach dem Ausbilden der Lotverbindung ein Befüllen und Verschließen des Sensors oder der Sensoren im Nutzenverband geschehen kann. Dazu kann zunächst unter Nutzung der Öffnung 8 ein dielektrisches Medium 7 in den Hohlraum 4 eingefüllt, wobei der Hohlraum 4 beispielsweise nicht vollständig gefüllt wird, sondern das Volumen des Hohlraums 4 nur bis zu einem vorbestimmten Anteil ausgefüllt wird (z. B. bis zur Hälfte). Das dielektrische Material 7 kann beispielsweise ein Silikonöl oder eine andere dielektrische Flüssigkeit aufweisen. Nach dem Füllen des Hohlraums 4 kann ein Verschließen der Öffnung 8 erfolgen, wobei verschiedene Möglichkeiten beispielsweise in der Fig. 6 beschrieben wurden. Eine Möglichkeit, die insbesondere für Leiterplatten sinnvoll sind, besteht darin, die Öffnung 8 mittels eines Laserlötens zu verschließen.

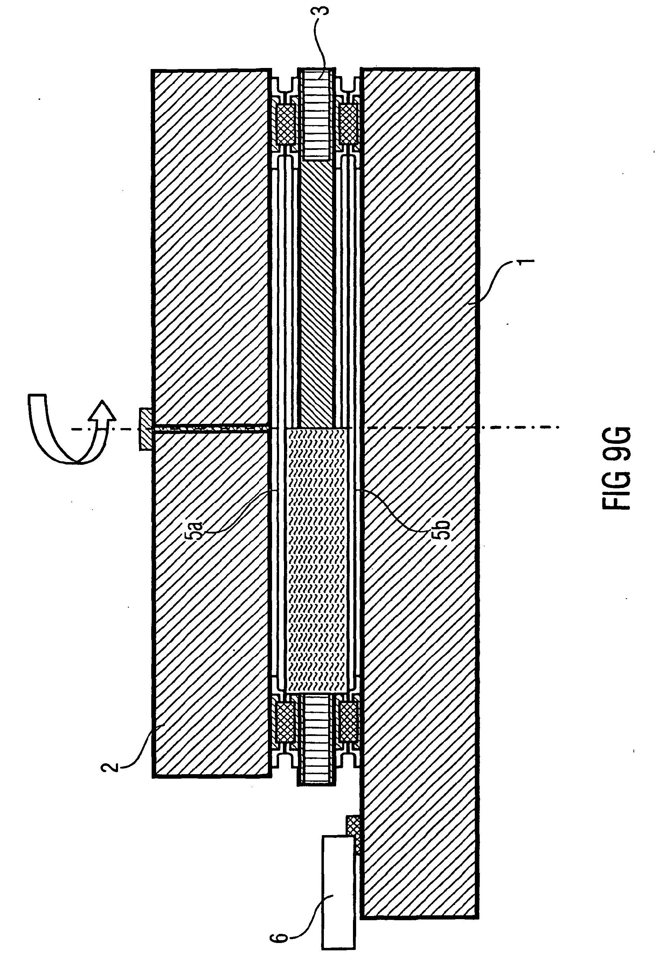

Fig. 9g zeigt wie in einem Folgeschritt eine Kalibrierung und ein Testen erfolgen können. Die Kalibrierung kann beispielsweise derart erfolgen, dass die Kapazitätsmessung zwischen der ersten und zweiten Elektrodenstruktur 5b, 5a für einen auf dem Prüfstand mit hoherPräzision einstellbaren Neigungswinkel erfolgen. Die für verschiedene Neigungswinkel erhaltenen Kapazitäten können dann in der Auswerteeinheit 6 entsprechend gespeichert werden (z. B. in Form einer Tabelle), so dass bei Nutzung des kapazitiven Neigungssensors ein Bestimmen der vorliegenden Neigung mit hoher Präzision erfolgen kann. Die Kalibrierung stellt damit insbesondere sicher, dass auftretende Prozessierungsvariationen kompensiert werden können, so dass auch bei einer abweichenden Prozessierung eine Bestimmung der Neigung mit hoher Genauigkeit ermöglicht wird. Für das Kalibrieren der einzelnen Sensoren ist es nicht erforderlich, die Sensoren im Nutzenverband zu vereinzeln bzw. zu trennen, sondern das Kalibrieren kann auch derart geschehen, dass der gesamte Nutzenverband entsprechend geneigt wird, wobei nur jeweils einer der Sensoren ausgemessen wird. Diese Prozessierung kann nacheinander für alle weiteren Sensoren im Nutzenverband durchgeführt werden.

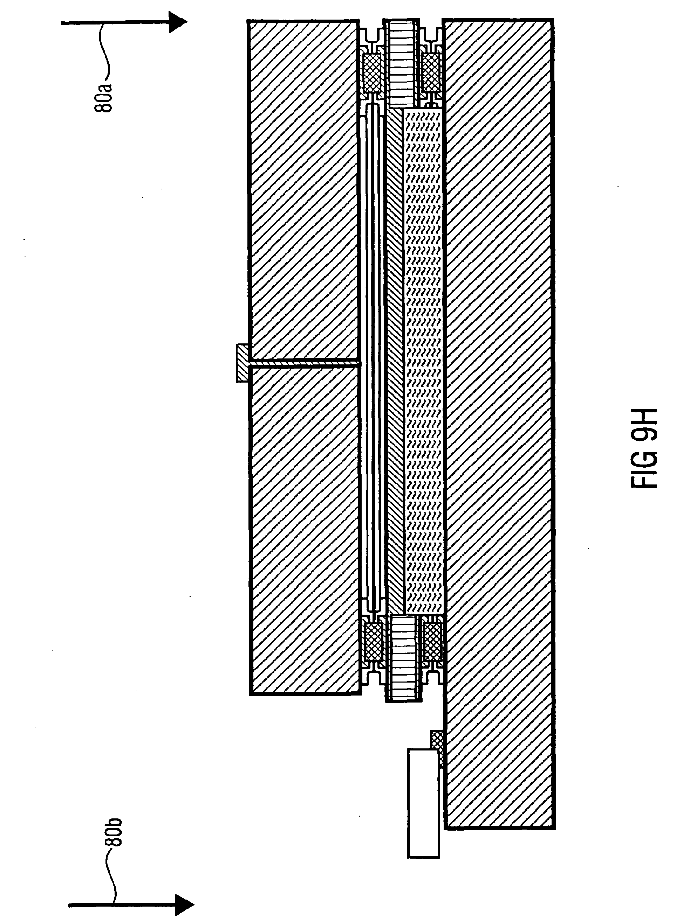

Fig. 9h beschreibt schließlich den Schritt des Vereinzelns der Sensorelemente (kapazitive Neigungssensoren), wobei das Vereinzeln beispielsweise ein Trennen entlang der Trennlinien 80a und 80b umfassen kann und als Resultat die fertig prozessierten Sensoren zur Verfügung stehen.

Damit lässt sich der Prozessablauf zur Fertigung von Leiterplattensensoren wie folgt zusammenfassen:
1. Aufbringen des Lots auf Boden-Elemente im Nutzenverband,
2. Aufbringen von Lot V1 auf Deckel-Elemente 2 oder auf die Oberseite der Abstandshalter 3 im Nutzenverband,
3. Bestücken der elektrischen Bauteile (beispielsweise der Auswerteschaltungen 6) auf den Bodenelementen 1 im Nutzenverband,
4. Ausrichten und Stapeln von einem Bodennutzen, Abstandshalternutzen und Deckelnutzen (wobei der Bodennutzen ein Substrat darstellt mit einer Vielzahl von Boden-Elementen 1, die nebeneinander auf dem Substrat angeordnet sind),
5. Verlöten der Bauteile unter Druck im Reflow-Ofen,
6. Füllen und Verschließen, das beispielsweise mittels Laserlöten geschehen kann, der einzelnen Sensoren im Nutzenverband,
7. Testen und Kalibrieren der einzelnen Sensoren im Nutzenverband auf dem Prüfstand und
8. Vereinzeln der Sensoren.

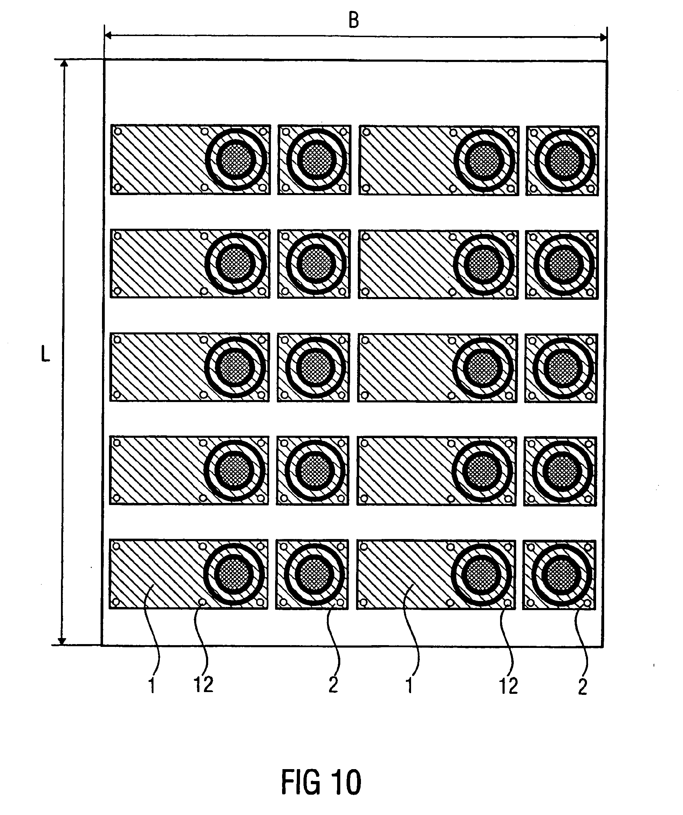

Fig. 10 zeigt eine beispielhafte Anordnung von Deckel- und Boden-Elementen 1, 2 im Nutzen für einen Prototypen, wobei der Nutzen eine Länge L und eine Breite B aufweist. Die Anordnung der Bodenelemente 1 und Deckelelemente 2 ist dabei derart gewählt, dass beispielsweise ein erster und zweiter Nutzen, wie sie in Fig. 10 gezeigt sind, derart übereinander angeordnet werden, dass die Deckelelemente des zweiten Nutzens über den Bodenelementen 1 des ersten Nutzens angeordnet werden und ebenso die Bodenelemente 1 des zweiten Nutzens über den Deckelelementen 2 des ersten Nutzens angeordnet werden. Dies kann beispielsweise dadurch geschehen, dass der zweite Nutzen umgedreht (Drehung um 180° um eine Drehachse in der lateralen Ausdehnung des Nutzens) über den ersten Nutzen gebracht wird und derart lateral verschoben, dass, wie oben beschrieben, die Deckel-elemente 2 des zweiten Nutzens oberhalb der Bodenelemente 1 des ersten Nutzens positioniert werden. Die Positionierung kann wiederum unter Nutzung der Öffnungen 12 und der Justagestiften 14 (in der Figur nicht gezeigt) erfolgen. Die Länge L kann beispielsweise einen Wert von ungefähr 200 mm aufweisen und die Breite B einen Wert von ungefähr 170 mm. Diese Werte können jedoch bei weiteren Ausführungsbeispielen entsprechend anders gewählt sein.

Fig. 11 zeigt eine Anordnung von Abstandshaltern 3 im Nutzen für Prototypen, wobei der Nutzen wiederum eine Länge L und eine Breite B aufweist, wobei die Länge L beispielsweise 200 mm und die Breite B 170 mm betragen kann. Die Anordnung der Abstandshalter 3 im Nutzen, wie es in der Fig. 11 gezeigt ist, kann beispielsweise derart geschehen, dass der Nutzen der Fig. 11 auf dem Nutzen der Fig. 10 aufgebracht werden kann und zwar derart, dass die Abstandshalter 3 auf den Bodenelementen 1 und den Deckelelementen 2 des Nutzens von der Fig. 10 angeordnet werden können. Dadurch wird es möglich, dass durch ein übereinander Anordnen eines ersten Nutzens der Fig. 10, eines Nutzens der Fig. 11 und eines zweiten Nutzens, wie er in der Fig. 10 gezeigt ist, die Sensorelemente im Nutzenverband angeordnet werden können und ein weiteres Prozessieren (Löten, Auffüllen mit dielektrischem Material, Kalibrieren) erfolgen kann. Die Sensoren sind nach einem abschließenden Trennen oder Vereinzeln fertig prozessiert.

Die bisher beschriebenen Ausführungsbeispiele können durch eine Reihe weiterer Ausgestaltungen für bestimmte Anwendungen optimiert werden. Beispielsweise kann es vorteilhaft sein, dass ebenfalls der Abstandshalter 3 an der Innenseite (die dem Hohlraum 4 zugewandt ist) mit einer Metallbeschichtung versehen werden. Dabei ist jedoch darauf zu achten, dass die erste Elektrodenstruktur 5b nicht mit der zweiten Elektrodenstruktur 5a kurzgeschlossen wird, was beispielsweise über entsprechende Trenngräben sichergestellt werden kann. Die weitere Metallisierung entlang der Abstandshalter 3 kann beispielsweise dazu benutzt werden, um an diesen Metallisierungen ein frei wählbares Potential anzulegen. Diese weitere Metallisierung hat den Vorteil, dass äußere Störeinflüssen weitestgehend abgeschirmt werden können. Das frei wählbare Potential kann beispielsweise auf ein Massepotential gelegt werden.

Besonders vorteilhaft ist es, die Strukturierung der Metallschichten der ersten und zweiten Elektrodenstruktur 5a, 5b an den Wänden des Hohlraums 4 derart zu wählen, dass eine möglichst hohe Kapazitätsänderung pro Änderung der Messgröße (z. B. Neigung des Sensors) erreicht wird. Dazu kann es sinnvoll sein, die Elektrodenfläche der ersten und zweiten Elektrodenstruktur 5a, 5b möglichst groß zu wählen, so dass abgesehen von den Seitenwänden entlang der Abstandshalter 3 der Boden 1 und der Deckel 2 weitestgehend mit der ersten und zweiten Elektrodenstruktur 5b, 5a versehen sind. Damit ist es möglich, eine hohe Sensitivität des Sensors zu erreichen. Andererseits kann es bei Anwendungen auch sinnvoll sein, die Elektrodenfläche der ersten und zweiten Elektrodenstruktur 5a, 5b auf einen kleinen Bereich zu beschränken, um beispielsweise Haftungseffekte, welche zwischen der ringförmigen Hohlraumwand und der dielektrischen Flüssigkeit 7 auftreten, zu minimieren. Diese Haftungseffekte würden sich nämlich dahingehend nachteilig auswirken, dass sie die Linearität des Sensorsignals (Ausgangssignal) verändern. Damit sind eine höhere Genauigkeit und ein verbessertes Hystereseverhalten des Sensors möglich. In Abhängigkeit von der gewünschten Anwendung kann somit eine Optimierung der Gestaltung der Elektroden erfolgen - insbesondere hinsichtlich ihrer Größe.

Es kann auch sinnvoll sein, die Form des Elektrodendesigns derart zu wählen, dass der kapazitive Neigungssensor insbesondere für kleine Winkeländerungen oder für ganz bestimmte Winkeländerungen ganz besonders sensitiv ist. Dies ist z. B. dann der Fall, wenn kleine Winkeländerungen für eine Drehung um eine bestimmte Drehachse eine große Kapazitätsänderung auftritt, was wiederum dann geschieht, wenn bei einer kleineren Winkeländerung oder kleinen Neigung die effektive Kondensatorfläche signifikant verändert würde.

Bei weiteren Ausführungsbeispielen ist es ebenfalls denkbar, dass der Hohlraum 4 bereits vor dem Verschließen mit dem dielektrischen Medium 7 befüllt wird. Dies ist insbesondere dann möglich, wenn entweder der Boden 1 oder der Deckel 2 bereits eine Ausnehmung aufweist, wie dies bei Kunststoffsubstraten M3 in MID-Bauweise möglich ist. In diesem Fall kann die dielektrische Flüssigkeit 7 in die Ausnehmung eingebracht werden und einen Teil des Hohlraumes ausfüllen - noch bevor der Sensor verschlossen wird. In einem solchen Fall kann auf die Befüllöffnung 8 in dem Deckel 2 verzichtet werden. Damit ist eine vereinfachte Prozessführung möglich, bei der auf ein Verschließen der Öffnung 8 verzichtet werden kann. Auch bei dieser Prozessführung kommt ein Reflow-Löten in Betracht, um eine Justierung der Elemente zueinander zu bewirken. Bei einer solchen Prozessführung ist jedoch zu beachten, dass die erreichte Temperatur im Lötprozess die dielektrische Flüssigkeit 7 nicht beeinträchtigen darf, oder dass während des Lötprozesses die dielektrische Flüssigkeit nicht verdampft.

Die zuvor beschriebenen Ausführungsbeispeile können mit anderen Worten auch wie folgt zusammengefasst werden.

Ein Aspekt betrifft verschiedene Fertigungsverfahren, wie die kapazitiven Sensoren zum Messen einer Messgröße gefertigt werden können.

Kernelement des Sensors ist die zur Hälfte mit der nichtleitenden, dielektrischen Flüssigkeit (7) gefüllte Kavität (4).

Die Herstellung der Kavität (4) erfolgt durch das stoffschlüssige Verbinden von zwei oder mehr nichtleitenden Substraten (1,2,3), welche mit leitenden, strukturierten Schichten (5 a/b/c) (Elektroden) versehen sind, die zusammen mit der nichtleitenden, dielektrischen Flüssigkeit (7) eine Differential-Kondensator-Anordnung bilden. Die Auswertung der Differenzkapazität erfolgt mittels einer Auswerteschaltung (6) welche direkt auf einem der Substrate befestigt wird.

### Aufbau der Kavität

### Materialien der Substrate

Als nichtleitende Substrate kommen Leiterplatten (M1), Keramiksubstrate (M2) sowie metallisierte Kunststoffsubstrate in MID-Technik in Betracht (M3)

Der Aufbau der Kavität aus Substraten vom Material M1 und M2 bedingt die Herstellung der Kavität aus mindestens drei Elementen: einem Bodenelement (1), einem Deckelelement (2) sowie einem Distanzelement (3), mit dem die Spaltweite der Kondensatoranordnung zwischen den beiden halbkreisförmigen Elektroden (5b/c) auf dem Bodenelement (1) und der Vollkreis-Elektrode (5a) auf dem Deckelelement (2) ausgebildet wird, wobei gemäß dem oben genannten Patent auch eine Ausführung mit geteilter Elektrode auf dem Deckelelement (2) vorstellbar ist.

Der Aufbau der Kavität aus dem Material M3 ermöglicht die Herstellung mit nur insgesamt 2 Teilen, da die Kavität durch Vertiefungen im Bodenelement (1) und im Deckelelement (2) dargestellt werden kann.

### Kombination der Materialien

Ebenfalls denkbar ist ein gemischter Aufbau aus verschiedenen Materialien, wobei die oben genannten Materialien beliebig gemischt werden können. Als sinnvollste Varianten sind in Fig. 2 zwei Varianten aufgeführt, wobei jeweils auf einem planen Bodenelement (1) aus M1 oder M2 ein Deckelelement (2) aus M3 befestigt wird, welches durch die spezielle Formgebung den Einsatz eines Distanzelements überflüssig macht.

### Verbindung der einzelnen Substrate zur Herstellung der Kavität

### Verbindungsverfahren

Als Verbindungsverfahren kommt das Löten (V1), das Kleben (V2) und - bei Herstellung der Kavität aus dem Material M1 - das Laminieren (V3) in Frage.

### Erfindungsgemäßer Verfahrensablauf bei Herstellung mittels Löten (V1)

Zunächst wird auf das Boden- und Deckelelement an den Fügestellen Lotpaste ringförmig aufgetragen. Anstelle der Lotpaste mit pastöser Beschaffenheit kann auch ein ringförmig ausgestanztes Lot-Preform (Festkörper) verwendet werden. Nach dem Aufbringen des Lots werden Bodenelement (1), Distanzelement (3) und Deckelelement (2) (bei Herstellung aus M1 oder M2) bzw. Bodenelement (1) und Deckelelement (2) (bei Herstellung aus M3) übereinander gesetzt. Im darauf folgenden Reflow-Lötprozess wird das Lot aufgeschmolzen und verbindet die Fügepartner stoffschlüssig.

### Verfahrensablauf bei Herstellung mittels Kleben (V2)

Der Ablauf ist im Prinzip identisch, nur dass anstelle des Reflow-Lötens ein Aushärteprozess stattfindet, bei dem der flüssig aufgetragene Kleber vernetzt und ebenfalls eine stoffschlüssige Verbindung zwischen den Fügepartnern herstellt.

### Verfahrensablauf bei Herstellung mittels Laminieren (V3)

Dieses spezielle Verfahren kann bei der Herstellung der Kavität aus M1 gewählt werden. Die Herstellung von mehrlagigen Leiterplatten erfolgt standardmäßig mittels Laminieren von vorgeformten und teilweise metallisierten Prepregs. Insofern ist die mit diesem Verfahren hergestellte Kavität (4) einfach als sog. "buried via" (vergrabene Durchkontaktierung) mit überdimensionalen Abmessungen zu betrachten. Die Herstellung erfolgt im gleichen Arbeitsschritt wie die Fertigung der Leiterplatte. Die so entstandene Kavität muss nur noch befüllt und verschlossen werden.

### Relative Positionierung der Elemente

### Erfindungsgemäßes Verbindungsverfahren V1:

Die Positionierung der Elemente zueinander kann beim Verbindungsverfahren V1 durch Führungsstifte (14) auf einer Aufnahmeplatte (13) realisiert werden, auf welche die zu fügenden Elemente (1,2, ggf. 3) mit dem darauf aufgebrachten Lot bzw. Kleber aufgesteckt werden. Hierfür werden in den Elementen (1, 2 und ggf. 3) entsprechende Bohrungen vorgesehen (12). Der Innendurchmesser der Bohrungen (12) wird dabei größer gewählt als der Außendurchmesser des Führungsstifts (14), so dass ein Spalt mit der Spaltweite d entsteht. Dadurch können sich die einzelnen Substrate etwas gegeneinander verschieben.

Im Reflow-Lötprozess tritt dann ein selbstzentrierender Effekt auf, da das flüssige Lot eine möglichst kleine Oberfläche annehmen will und deswegen die ringförmigen Lotstellen die ideale Kreisform anstreben.

Bei diesem Reflow-Lötprozess kann gleichzeitig auch die Bestückung des Bodenelements mit den notwendigen Bauteilen für eine Ausleseschaltung erfolgen.

### Verbindungsverfahren V2 in Kombination mit M3:

Das Verbindungsverfahren V2 ist kein selbstzentrierender Prozess. Beim Aushärten des Klebers müssen die zu fügenden Teile mechanisch exakt positioniert werden. Bei Herstellung mindestens eines Fügepartners aus M3 können an diesem Fügepartner Zentriermarken (15) angebracht werden, welche auf dem Gegenstück in entsprechende Vertiefungen (16) oder Löcher eingreifen und so eine exakte Positionierung der zu fügenden Bauteile zueinander gewährleisten.

### Verschließen der Kavität

Nach dem Fügen der Fügepartner ist eine Kavität (4) entstanden, welche durch eine kleine Befüllöffnung (8) im Deckelelement mit der nichtleitenden, dielektrischen Flüssigkeit (7), z.B. Silikonöl befüllt wird.

Nach dem Abschluss des Befüllprozesses wird die Befüllöffnung (8) verschlossen. Dies kann durch ein Verschließen mit Lot (9) erfolgen, weitere Möglichkeiten sind das Einpressen einer Kugel (10) oder das Einbringen eines Stopfens (11) in die Befüllöffnung (8).

### Weitere Verfahrens- bzw. Aufbauvarianten:

Das Distanzelement (3) kann an der Innenseite, welche die ringförmige Wandung der Kavität darstellt, ebenfalls mit einer Metallbeschichtung versehen werden, so dass ein vollständig mit Metall überzogener Innenraum in der Kavität (4) entsteht (abgesehen natürlich von sehr kleinen Trenngräben, welche die Elektroden elektrisch voneinander trennen). Dies ist insbesondere auch der Fall, wenn das Distanzelement (3) in das Bodenelement (1) oder das Deckelelement (2) integriert ist. Die Metallflächen, welche nicht zur Messung der Differenzkapazität benötigt werden, also alle Metallflächen außer den Elektroden (5a/b/c), werden auf ein frei wählbares Potential gelegt um die Messung von äußeren Störeinflüssen abzuschirmen. Gewöhnlich wird das frei wählbare Potential identisch mit dem Massepotential sein.

Die Strukturierung der Metallschicht an den Wänden der Kavität (4), wodurch die Elektroden (5a/b/c) dargestellt werden, kann auf verschiedene Weise erfolgen. Einerseits kann die Elektrodenfläche auf den größtmöglichen Bereich ausgedehnt werden, der innerhalb der Kavität zur Verfügung steht. Vorteil hiervon ist die größtmögliche Kapazitätsänderung pro Änderung der Messgröße (z.B. Sensorneigung) und damit eine hohe Empfindlichkeit des Sensors. Es kann jedoch auch die Elektrodenfläche auf einen kleineren Bereich im Inneren der Kavität beschränkt werden. Dies hat den Vorteil, dass Haftungseffekte, welche zwischen der ringförmigen Kavitätswand und der dielektrischen Flüssigkeit auftreten und welche sich negativ auf die Linearität des Ausgangssignals auswirken, vernachlässigt werden. Eine höhere Genauigkeit und ein verbessertes Hystereseverhalten der Sensoren werden dadurch bedingt.

Durch ein entsprechendes Elektrodendesign können andere Anwendungen realisiert werden, bei denen z.B. nur ein kleiner Winkelbereich abgedeckt wird, dabei jedoch relativ zur Winkeländerung eine größere Kapazitätsänderung auftritt, was insgesamt die Winkelauflösung der Anordnung erhöht (vom Prinzip so ähnlich wie die Libelle in einer Wasserwaage).

Als weitere Verfahrensvariante ist das Befüllen der Kavität vor dem Verschließen zu nennen. Dies ist selbstverständlich nur dann möglich, wenn mindestens ein Fügepartner eine Kavität beinhaltet, aus welcher die dielektrische Flüssigkeit nicht austreten (z.B. überlaufen) kann, bevor der Sensor verschlossen ist. Beim Fügen mittels Reflow-Löten sollte dafür gesorgt werden, dass bei den im Lötprozess erreichten Temperaturen die dielektrische Flüssigkeit nicht zersetzt wird oder verdampft. Das genannte Verfahren bietet sich also im Wesentlichen für MID-Sensoren (M3) an, welche durch Kleben gefügt werden.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

## Patentansprüche

1. Verfahren zur Herstellung eines kapazitiven Sensors, mit folgenden Schritten:
Anordnen eines Abstandshalters (3) zwischen einem Boden (1) mit einer ersten Elektrodenstruktur (5b) und einem Deckel (2) mit einer zweiten Elektrodenstruktur (5a), so dass zwischen der ersten Elektrodenstruktur (5b) und der zweiten Elektrodenstruktur (5a) ein Hohlraum (4) ausgebildet wird, der seitlich von dem Abstandshalter (3) begrenzt wird;
Justieren des Bodens (1) und des Deckels (2), wobei das Justieren eine Verwendung eines Justiermittels (12; 14; 15; 16) umfasst und das Justieren ein laterales Ausrichten des Bodens (1) und des Deckels (2) zueinander einschließt, so dass die erste Elektrodenstruktur (5b) und die zweite Elektrodenstruktur (5a) einen Kondensator mit maximierter Kondensatorfläche bilden,
wobei in dem Hohlraum eine dielektrische Flüssigkeit (7) einbringbar ist und die erste Elektrodenstruktur (5b) und die zweite Elektrodenstruktur (5a) derart ausgebildet und zueinander angeordnet werden, so dass eine Neigung des Sensorelements aufgrund einer relativen Bewegung zwischen der dielektrischen Flüssigkeit (7) und der ersten und zweiten Elektrodenstruktur (5b, 5a) zu einer Kapazitätsänderung zwischen der ersten Elektrodenstruktur (5b) und der zweiten Elektrodenstruktur (5a) führt;
**dadurch gekennzeichnet, dass** das Verfahren ein Ausbilden einer flüssigkeitsdichten Verbindung zwischen dem Boden (1) und dem Abstandshalter (3) und zwischen dem Abstandshalter (3) und dem Deckel (2) unter Verwendung eines Reflow-Lötprozess umfasst
und dass das Justieren des Bodens (1) und des Deckels (2) ein Feinjustieren unter Verwendung des Reflow-Lötprozess umfasst.

2. Verfahren nach Anspruch 1, wobei bei dem Schritt des Anordnens für den Boden (1) und den Deckel (2) unterschiedliche Materialien verwendet werden.

3. Verfahren nach einem der vorhergehenden Ansprüche, bei dem der Schritt des Anordnens ein Verwenden von Leiterplatten als Boden (1) oder Deckel (2) umfasst, wobei die Leiterplatten mehrlagig ausgebildet sind.

4. Verfahren nach einem der vorhergehenden Ansprüche, bei dem der Schritt des Justierens ein Verwenden eines Führungsstiftes (14) und einer Bohrung (12) als Justiermittel umfasst, wobei die Bohrung (12) in dem Boden (1) und dem Deckel (2) ausgebildet ist, so dass beim Justieren der Boden (1) und der Deckel (2) auf den Führungsstift (14) aufsetzt werden.

5. Verfahren nach einem der vorhergehenden Ansprüche, das ferner einen Schritt eines Verschließens einer Öffnung (8) umfasst, wobei die Öffnung (8) ausgebildet ist, um die dielektrische Flüssigkeit (7) in den Hohlraum (4) einzubringen.

6. Verfahren nach Anspruch 5, bei dem der Schritt des Verschließens ein Löten (9) oder ein Einpressen einer Kugel (10) oder ein Einbringen eines Stopfens (11) umfasst.

7. Verfahren nach einem der vorhergehenden Ansprüche, das ferner einen Schritt eines Kalibrierens umfasst, wobei das Kalibrieren ein Anordnen des kapazitiven Sensors in einer vorbestimmten Neigung umfasst und daran anschließend ein Messen einer Kapazität zwischen der ersten und zweiten Elektrodenstruktur (5b, 5a) aufweist.

8. Verfahren nach einem der vorhergehenden Ansprüche, das ferner einen Schritt des Optimierens der Elektrodenfläche der ersten Elektrodenstruktur (5b) und/oder ein Optimieren der Elektrodenfläche der zweiten Elektrodenstruktur (5a) umfasst, wobei der Schritt des Optimierens derart durchgeführt wird, dass eine möglichst hohe Sensitivität des kapazitiven Sensors für eine vorbestimmte Neigungsänderung erreicht wird.

9. Verfahren nach einem der vorhergehenden Ansprüche, bei dem der Boden (1) in einem ersten Nutzenverband und der Deckel (2) in einem zweiten Nutzenverband angeordnet sind und bei dem das Verfahren ferner den Schritt eines Anordnens eines ersten und zweiten Nutzenverbands, so dass der Boden (1) und der Deckel (2) übereinander angeordnet sind, umfasst.

10. Verfahren nach Anspruch 1, bei dem der Schritt des Anordnens des Abstandshalters (3) ein Verwenden von einem Abstandshalter (3) mit einer Metallbeschichtung umfasst, wobei die Metallbeschichtung derart an dem Abstandshalter (3) ausgebildet ist, so dass durch die Metallbeschichtung eine seitliche Abgrenzung des Hohlraumes (4) gebildet wird.

11. Verfahren nach Anspruch 10, das ferner einen Schritt eines Anlegens eines vorbestimmten Potentials an der Metallbeschichtung umfasst.

## Claims

1. Method of producing a capacitive sensor, comprising:
arranging a spacer (3) between a bottom (1) having a first electrode structure (5b) and a lid (2) having a second electrode structure (5a), such that a cavity (4) is formed between the first electrode structure (5b) and the second electrode structure (5a), which is laterally limited by the spacer (3);
adjusting the bottom (1) and the lid (2), wherein adjusting comprises usage of an adjustment means (12; 14; 15; 16) and adjusting includes laterally directing the bottom (1) and the lid (2) to one another such that the first electrode structure (5b) and the second electrode structure (5a) form a capacitor with a maximized capacitor area,
wherein a dielectric liquid (7) can be introduced into the cavity, and the first electrode structure (5b) and the second electrode structure (5a) are implemented and arranged to each other such that an inclination of the sensor element due to a relative movement between the dielectric liquid (7) and the first and second electrode structures (5b, 5a) results in a change of capacitance between the first electrode structure (5b) and the second electrode structure (5a);
**characterized in that** the method comprises a formation of a liquid-tight connection between the bottom (1) and the spacer (3) and between the spacer (3) and the lid (2) by using a reflow soldering process, and that adjusting the bottom (1) and the lid (2) comprises fine-adjusting by using a reflow soldering process.

2. Method according to claim 1, wherein in the step of arranging different materials are used for the bottom (1) and the lid (2).

3. Method according to one of the previous claims, wherein the step of arranging comprises using printed circuit boards as bottom (1) or lid (2), wherein the printed circuit boards are implemented in a multilayered manner.

4. Method according to one of the previous claims, wherein the step of adjusting comprises using an alignment pin (14) and a bore (12) as adjustment means, wherein the bore (12) is formed in the bottom (1) and the lid (2) such that, during adjustment, the bottom (1) and the lid (2) are fitted over the alignment pin (14).

5. Method according to one of the previous claims, further comprising a step of closing an opening (8), wherein the opening (8) is implemented to introduce the dielectric liquid (7) into the cavity (4).

6. Method according to claim 5, wherein the step of closing comprises soldering (9) or inserting a ball (10) or introducing a plug (11).

7. Method according to one of the previous claims, further comprising a step of calibrating, wherein calibrating comprises arranging the capacitive sensor in a predetermined inclination and subsequently measuring a capacitance between the first and second electrode structures (5b, 5a).

8. Method according to one of the previous claims, further comprising a step of optimizing the electrode area of the first electrode structure (5b) and/or optimizing the electrode area of the second electrode structure (5a), wherein the step of optimizing is performed such that the sensitivity of the capacitive sensor, which is as high as possible, is obtained for a predetermined change of inclination.

9. Method according to one of the previous claims, wherein the bottom (1) is arranged in a first batch and the lid (2) in a second batch, and wherein the method further comprises the step of arranging first and second batches, so that the bottom (1) and the lid (2) are arranged above one another.

10. Method according to claim 1, wherein the step of arranging the spacer (3) comprises using a spacer (3) with a metal coating, wherein the metal coating is implemented on the spacer (3) such that a lateral limitation of the cavity (4) is formed by the metal coating.

11. Method according to claim 10, further comprising a step of applying a predetermined potential to the metal coating.

## Revendications

1. Procédé de fabrication d'un capteur capacitif, aux étapes suivantes consistant à:
disposer une entretoise (3) entre un fond (1) avec une première structure d'électrode (5b) et un couvercle (2) avec une deuxième structure d'électrode (5a), de sorte que soit formé, entre la première structure d'électrode (5b) et la deuxième structure d'électrode (5a), un espace creux (4) qui est délimité latéralement par l'entretoise (3);
ajuster le fond (1) et le couvercle (2), l'ajustement comprenant une utilisation d'un moyen d'ajustement (12; 14; 15; 16) et l'ajustement comportant un alignement latéral du fond (1) et du couvercle (2) l'un par rapport à l'autre, de sorte que la première structure d'électrode (5b) et la deuxième structure d'électrode (5a) constituent un condensateur à surface de condensateur maximisée,
dans l'espace creux pouvant être introduit un liquide diélectrique (7) et la première structure d'électrode (5b) et la deuxième structure d'électrode (5a) étant réalisées et disposées l'une par rapport à l'autre de sorte qu'une inclinaison de l'élément capteur par suite d'un mouvement relatif entre le liquide diélectrique (7) et la première et la deuxième structure d'électrode (5b, 5a) entraîne une variation de capacité entre la première structure d'électrode (5b) et la deuxième structure d'électrode (5a),
**caractérisé par le fait que** le procédé comprend la réalisation d'une connexion étanche aux liquides entre le fond (1) et l'entretoise (3) et entre l'entretoise (3) et le couvercle (2) à l'aide d'un processus de reflux, et que l'ajustement du fond (1) et du couvercle (2) comprend un ajustement fin à l'aide du processus de reflux.

2. Procédé selon la revendication 1, dans lequel sont utilisés, à l'étape de disposition, des matériaux différents pour le fond (1) et le couvercle (2).

3. Procédé selon l'une des revendications précédentes, dans lequel l'étape de disposition comporte une utilisation de plaques conductrices comme fond (1) ou couvercle (2), les plaques conductrices étant réalisées en plusieurs couches.

4. Procédé selon l'une des revendications précédentes, dans lequel l'étape d'ajustement comporte une utilisation d'une goupille de guidage (14) et d'un alésage (12) comme moyens de guidage, l'alésage (12) étant réalisé dans le fond (1) et le couvercle (2), de sorte que, lors de l'ajustement, le fond (1) et le couvercle (2) sont placés sur la goupille de guidage (14).

5. Procédé selon l'une des revendications précédentes, comprenant par ailleurs une étape consistant à obturer une ouverture (8), l'ouverture (8) étant réalisée pour introduire le liquide diélectrique (7) dans l'espace creux (4).

6. Procédé selon la revendication 5, dans lequel l'étape d'obturation comporte un brasage (9) ou une introduction par pression d'une bille (10) ou une introduction d'un bouchon (11).

7. Procédé selon l'une des revendications précédentes, comprenant par ailleurs une étape consistant à étalonner, l'étalonnage comportant une disposition du capteur capacitif selon une inclinaison prédéterminée et présentant ensuite une mesure d'une capacité entre la première et la deuxième structure d'électrode (5b, 5a).

8. Procédé selon l'une des revendications précédentes, comprenant par ailleurs une étape consistant à optimiser la surface d'électrode de la première structure d'électrode (5b) et/ou à optimiser la surface d'électrode de la deuxième structure d'électrode (5a), l'étape d'optimisation étant réalisée de sorte que soit obtenue une sensibilité aussi grande que possible du capteur capacitif pour une variation d'inclinaison prédéterminée.

9. Procédé selon l'une des revendications précédentes, dans lequel le fond (1) est disposé selon un premier assemblage utile et le couvercle (2) est disposé selon un deuxième assemblage utile et dans lequel le procédé comprend par ailleurs l'étape d'une disposition d'un premier et d'un deuxième assemblage utile, de sorte que le fond (1) et le couvercle (2) soient disposés l'un au-dessus de l'autre.

10. Procédé selon la revendication 1, dans lequel l'étape de disposition de l'entretoise (3) comporte une utilisation d'une entretoise (3) avec un revêtement métallique, le revêtement métallique étant réalisé sur l'entretoise (3) de sorte que par le revêtement métallique soit formée une délimitation latérale de l'espace vide (4).

11. Procédé selon la revendication 10, comprenant par ailleurs une étape d'application d'un potentiel prédéterminé sur le revêtement métallique.
